# EUROPÄISCHE PATENTSCHRIFT

(11) **EP 2 393 598 B1**
(45) Veröffentlichungstag und Bekanntmachung des Hinweises auf die Patenterteilung: **29.05.2019**
(21) Anmeldenummer: 10701493.8
(22) Anmeldetag: 15.01.2010
(51) Int. Cl.: B02C 18/14, B29B 17/04, B02C 18/16, B02C 23/26

(54) **VORRICHTUNG ZUR ZERKLEINERUNG VON KUNSTSTOFF**
DEVICE FOR REDUCING PLASTIC
DISPOSITIF DE BROYAGE DE MATIÈRE PLASTIQUE

(30) Priorität: 03.02.2009 AT 1852009
(43) Veröffentlichungstag der Anmeldung: 14.12.2011
(73) Patentinhaber: Starlinger & Co. Gesellschaft m.b.H., 1060 Wien (AT)
(72) Erfinder: LOVRANICH, Christian, A-2564 Weissenbach/Triesting (AT); BRANDSTAETTER, Johann, A-2564 Furth/Triesting (AT); PECHHACKER, Andreas, A-2571 Altenmarkt (AT)
(74) Vertreter: Margotti, Herwig Franz
(86) Internationale Anmeldenummer: PCT/EP2010/050439
(87) Internationale Veröffentlichungsnummer: WO 2010/089174

(56) Entgegenhaltungen:
- WO-A1-2008/098274
- DE-A1- 2 609 850
- US-A- 3 960 334
- US-A- 5 556 039
- US-A1- 2003 168 537

## Beschreibung

Die Erfindung betrifft eine Vorrichtung zur Zerkleinerung von thermoplastischem Kunststoffgut, die einen Behälter zur Aufnahme des, insbesondere lose gepackten, Kunststoffguts und eine in den Behälter ragende oder darin angeordnete Zerkleinerungseinrichtung zur Zerkleinerung des Kunststoffguts und seiner Förderung zu einer Austragsöffnung umfasst, mit den Merkmalen des Oberbegriffs von Anspruch 1.

Kunststoffabfälle unterscheiden sich nach ihrer Entstehung und Reinheit. Es wird zwischen Produktions- und sogenannten "Post-Consumer"-Abfällen sowie zwischen sauberen, sortenreinen und vermischten, verschmutzten Kunststoffabfällen unterschieden.

Bei der industriellen Herstellung von Kunststoffprodukten fällt ein Ausschuss an, welcher während des Anfahrens, Umstellens oder der Wartung von Anlagen entsteht, bis die geforderten Produktdaten erreicht sind, oder der durch das Produktionsverfahren selbst bedingt ist, beispielsweise als Stanzabfall oder als zu verwerfender Randstreifen von Blasfolien.

Bevor Kunststoffabfälle dem eigentlichen Recycling zugeführt werden können, müssen diese rein vorliegen. Dazu werden sie beispielsweise in die einzelnen Fraktionen Polyolefine (als Vertreter seien hier Polyethylen PE sowie Polypropylen PP genannt), Polyvinylchlorid (PVC) und Polystyrol getrennt und es werden anhaftende Fremdstoffe, wie beispielsweise Metalle oder Farben meist mit physikalischen Verfahren entfernt. Die sortenreinen Kunststoffabfälle werden üblicherweise danach mit Wasser gereinigt und anschließend mit gängigen Verfahren der Kunststoffverarbeitung aufbereitet. Zu diesen Verfahren gehören z.B. Extrusion, Spritzgieß- bzw. Spritzpressverfahren, Intrusion und Sinterpressverfahren.

Problematisch bei der Verarbeitung von gesammelten Kunststoffabfällen sind dabei die stark schwankenden Betriebsbedingungen bei der Beschickung derartiger Recyclinganlagen. So müssen unterschiedliche Gehalte an Restfeuchte, Verschmutzungen, Dichteschwankungen und Aufgabeportionen beherrscht werden, um aus einem heterogenen Abfall ein homogenes Produkt mit gleichbleibender Produktqualität zu erzielen.

Nasse Kunststoffabfälle werden zumeist in Zentrifugen getrocknet, durch die Zentrifugalkraft wird die Abtrennung der auf dem Kunststoff anhaftenden Flüssigkeit dabei wesentlich beschleunigt. Nachteilig dabei ist neben dem hohen Energieaufwand die durch die Zentrifugalkraft scheinbare Gewichtszunahme des zu trocknenden Gutes sowie die hohe Verdichtung des Abfallstoffes, der anschließend mit erheblichem Kraftaufwand wieder gelockert und weiter transportiert werden muss.

Aus dem Stand der Technik ist dazu beispielsweise aus der WO 2007/112466 eine Vorrichtung zur Trocknung von Kunststoffteilchen bekannt, die einen Rotationskörper mit einem perforierten Mantel verwendet, wobei sich der Raum von der Einlassöffnung des feuchten Kunststoffabfalls zum Austrag des Materials hin erweitert. Der zu trocknende Kunststoffabfall wird stirnseitig am kleineren Ende des Rotationskörpers bzw. des perforierten Mantels eingebracht, wobei das Gut im zwischen dem Rotationskörper und dem perforierten Mantel bestehenden Ringspalt gegen die Innenfläche des perforierten Mantels geschleudert wird. Durch den Transport des feuchten Gutes in Richtung eines größer werdenden Durchmessers des Spaltes zwischen Rotationskörper und Mantel werden eine bessere Durchlüftung und damit ein besserer Trocknungseffekt erzielt. In einer bevorzugten Ausführung ist im Inneren des Rotationskörpers ein Gebläse, beispielsweise in Form eines um die Achse des Rotationskörpers rotierenden Flügels, angebracht. Dadurch wird die Trocknung des Kunststoffabfalls im Aufgabebereich weiter beschleunigt. Eine Zerkleinerungsvorrichtung ist in der Trocknungsvorrichtung nicht vorhanden.

Nachteilig an dieser Ausführung ist, dass das gesamte zu trocknende Gut in der Zentrifuge mit hohem Energieeintrag beschleunigt werden muss und dabei zwangsläufig verdichtet wird. Zur Lockerung des Kunststoffabfalls, um eine Weiterförderung zu ermöglichen, gelangt das Gut am unteren Ende schließlich zu einem Radialgebläse, welches das getrocknete Gut erfasst und es durch Ausblassstutzen aus der Vorrichtung austreibt. Das Radialgebläse wird dabei allerdings sehr stark beansprucht, es muss deshalb und auch zur Reduzierung des entstehenden Lärms besonders dickwandig ausgeführt werden. Damit müssen im Gebläse dieser Vorrichtung zusätzliche schwere Massen mit hohem Energieaufwand laufend angetrieben werden. Eine Zerkleinerung des Kunststoffabfalls findet nicht oder nur geringfügig statt.

Die DE 92 02 161 stellt ein Gerät zum Zerkleinern von leeren Ölkanistern aus Kunststoff vor. In einer einfachen Ausführungsform ist am Boden eines Füllschachtes eine Schneidscheibe mit nach oben angestellten Schneidmessern vorgesehen, wobei direkt unterhalb der Schneidscheibe ein als Abtropfsieb gestalteter Fangkorb für die zerkleinerten Kunststoffschnitzel und zuunterst eine Restölfangschale angeordnet sind. Zwischen Außengehäuse und Füllschacht ist ein Heißluftgebläse vorgesehen, dass durch mindestens eine Öffnung mit dem Füllschacht in Verbindung steht. Die Vorrichtung wird diskontinuierlich betrieben, indem der Füllschacht mit leeren Kanistern befüllt wird, anschließend der Deckel des Füllschachtes verschlossen und danach der Motor zum Antrieb der Schneidscheibe in Gang gesetzt wird. Durch das Zerschneiden und Zerkleinern der Kanister wird das Volumen der Abfallcharge stark reduziert, es können daher mehrere Chargen an zerkleinertem Kunststoffabfall gemeinsam im Fangkorb gesammelt werden, bevor dieser entleert werden muss. In einer besonderen Ausführung ist innerhalb des Füllschachtes in einem Abstand zur Schneidscheibe zusätzlich eine rotierende Siebtrommel vorgesehen, wobei die Abfallcharge in der Siebtrommel in Rotation versetzt wird und dabei das Restöl intensiver als nur durch Abtropfen vom Kunststoffabfall entfernt wird.

Nachteilig an dieser Vorrichtung ist, dass sie nicht kontinuierlich betrieben werden kann, da hier - vergleichbar mit einer elektrischen Kaffeemühle - nach dem Befüllen mit einer Charge des zu zerkleinernden Gutes ein Deckel geschlossen werden muss, bevor das Schneidwerkzeug in Gang gesetzt werden kann. Dabei kommt es sowohl bei der einfachen Ausführung, als auch bei der Ausführung mit einer rotierenden Siebtrommel zur Verdichtung der zerkleinerten Kunststoffschnitzel, da diese erst nach mehreren Befüllzyklen gesammelt dem Fangkorb entnommen werden. Außerdem ist eine derartige Betriebsführung zeitintensiv und bedingt einen erhöhten Überwachungs- und Wartungsaufwand.

Eine kontinuierliche Weiterverarbeitung eines derart vorbehandelten Abfalls erfordert daher zumindest einen weiteren Vorratsbehälter als Zwischenspeicher der einzelnen Abfallchargen sowie eine geeignete Vorrichtung, damit die verdichteten Kunststoffschnitzel wieder gelockert werden und zu den nachfolgenden Arbeitsschritten befördert werden können.

Die AT 504 854 zeigt ein Verfahren und eine Vorrichtung zur Aufbereitung von vorzugsweise thermoplastischen Kunststoffabfällen, wobei die Vorrichtung einen Aufnahmebehälter umfasst, an dessen Boden eine horizontal rotierende Trägerscheibe mit an ihrer Oberseite befestigten Misch- bzw. Schneidwerkzeugen angeordnet ist. Das Abfallmaterial wird nach dem Einfüllen von diesen rotierenden Mischwerkzeugen im Bereich des Aufnahmebehälters gemischt und dabei wahlweise auch zerkleinert bzw. erwärmt. Durch einen Ringspalt, der sich zwischen der rotierenden Trägerscheibe und dem Aufnahmebehälter befindet, gelangt das entsprechend zerkleinerte Kunststoffmaterial allmählich in den unterhalb der rotierenden Trägerscheibe befindlichen Raum und wird dort durch zusätzliche, ebenfalls horizontal rotierende Mischwerkzeuge weiter zerkleinert bzw. erwärmt. Gleichzeitig wird das zerkleinerte Kunststoffmaterial durch die Rotationswirkung der unteren Mischwerkzeuge in eine Austragsöffnung am Umfang des Aufnahmebehälters befördert und gelangt von dort weiter mit einer Förderschnecke zu einem nachfolgenden Kunststoff-Extruder. Im unteren Bereich der Behälterwände sowie wahlweise auch im Bereich der Mischwerkzeuge sind Öffnungen vorgesehen, durch die Gas in den Aufnahmebehälter zugeführt wird, welches den Trocknungsvorgang von beispielsweise wasserfeuchtem Kunststoffabfall im Aufnahmebehälter beschleunigen soll.

Nachteilig an dieser Vorrichtung ist, dass es während des Betriebs im Bereich des Aufnahmebehälters, der oberhalb der rotierenden Scheibe mit den Mischwerkzeugen liegt, zu einer Thrombenbildung und damit zu einer Verdichtung des feuchten Kunststoffmaterials an den Außenwänden des Aufnahmebehälters kommt. Das eingedüste, aufsteigende Gas kann in diesem Bereich das feuchte Kunststoffmaterial nur unzureichend durchströmen, die erwünschte Trocknung wird dadurch behindert. Weiters ist es mit dieser Vorrichtung nicht möglich, eine gleichmäßige, enge Korngrößenverteilung der Kunststoffpartikel zu gewährleisten, denn es können auch größere, flächige Kunststoffabfälle im Ringspalt an den Mischwerkzeugen vorbei direkt zur Austragsöffnung gelangen, ohne zerkleinert worden zu sein. Eine Verblockung der Austragsöffnung durch größere flächige Kunststoffteile und dadurch bedingte Betriebsstörungen sind dann die Folge. Weiters können größere Kunststoffteile und schwer zerkleinerbare Materialien mit dieser Vorrichtung nicht ohne eine Vorzerkleinerung verarbeitet werden.

Es besteht demnach Bedarf zur Verbesserung der Nachteile des Standes der Technik derartiger Vorrichtungen, die Kunststoffabfall zerkleinern und auch trocknen können. Es soll eine Vorrichtung zur Verfügung gestellt werden, die vorzugsweise im kontinuierlichen Betrieb ohne energieaufwändige Zentrifugen eine effiziente Trocknung feuchter Kunststoffabfälle sowie gleichzeitig auch deren zuverlässige Zerkleinerung gewährleistet und das so vorbehandelte Abfallmaterial anschließend direkt in einen Extruder gefördert werden kann.

Diese Aufgaben werden von einer Vorrichtung zur Zerkleinerung von thermoplastischem Kunststoffgut gemäß dem Oberbegriff von Anspruch 1 mit den Merkmalen des kennzeichnenden Teiles von Anspruch 1 gelöst.

Vorteilhafte Ausgestaltungen der Erfindung sind in den abhängigen Ansprüchen und der Beschreibung dargestellt.

Bei einer erfindungsgemäßen Vorrichtung zur Zerkleinerung von thermoplastischem Kunststoffgut, umfassend einen Behälter zur Aufnahme des, insbesondere lose gepackten, Kunststoffguts und eine in den Behälter ragende oder darin angeordnete Zerkleinerungseinrichtung zur Zerkleinerung des Kunststoffguts, und seiner Förderung zu einer Austragsöffnung, wobei die Zerkleinerungseinrichtung zumindest einen um eine waagrechte Rotationsachse drehbaren Rotorkörper umfasst, der an seiner Umfangsfläche mit Messern bestückt ist, wobei vorzugsweise im Behälter nahe der Umlaufbahn der Messer des Rotorkörpers stehende Messer angeordnet sind, die mit den Messern des Rotorkörpers einen Schereffekt auf das Kunststoffgut ausüben, wobei die Vorrichtung Lufteinlässe im Bereich der Zerkleinerungseinrichtung und Luftauslässe in der Behälterwand aufweist, und wobei die Vorrichtung eine den Rotorkörper zumindest teilweise umgebende Mantelwand aufweist, die in einem Abstand von der Umlaufbahn der Messer des Rotorkörpers angeordnet ist und durch Rillen oder Stege profiliert ist, wobei die Lufteinlässe in der Mantelwand angeordnet sind, wobei die Luft aus einer Drucklufterzeugungseinrichtung über Leitungen zu den Lufteinlässen geführt wird, und wobei eine Führung der Luft im Spaltraum hauptsächlich in Umdrehungsrichtung des Rotorkörpers und damit in Förderrichtung des Kunststoffgutes erfolgt, wobei die Zerkleinerungseinrichtung zur Förderung des Kunststoffguts zu einer Austragsöffnung ausgebildet ist, wobei die Rillen oder Stege bei Drehung des Rotorkörpers das Kunststoffgut im Spaltraum in Richtung der Austragsöffnung zusammenschieben.

Die vorliegende Erfindung bietet die folgenden Vorteile gegenüber dem bekannten Stand der Technik:
- Die Vorrichtung kann vollkontinuierlich und wartungsarm betrieben werden und damit zur Trocknung sowie Zerkleinerung von thermoplastischem Kunststoffgut direkt vor einem kontinuierlich arbeitenden Kunststoff-Extruder eingesetzt werden.
- Sowohl die Oberflächenfeuchte, als auch die vom Material hygroskopisch aufgenommene Feuchte können in der erfindungsgemäßen Vorrichtung getrocknet werden.
- Eine ausschließlich chargenweise Befüllung mit Kunststoffgut ist bei dieser Vorrichtung nicht erforderlich.
- Eine Manipulation und chargenweise Entleerung von getrocknetem und zerkleinertem Kunststoffgut entfällt, das behandelte Kunststoffgut wird kontinuierlich mittels Dosierschnecke aus der Vorrichtung herausgefördert.
- Eine Verdichtung des Kunststoffgutes, zu der es beispielsweise während des Abschleuderns in einer Zentrifuge zwangsläufig kommt, entfällt. Hier bleibt das feuchte Kunststoffgut im Aufnahmebehälter lose verteilt.
- Bei der erfindungsgemäßen Vorrichtung wird im Bereich des Aufnahmebehälters kein rotierender Zentrifugeneinsatz, beispielsweise ein Siebkorb, samt zugehörigem Antrieb benötigt. Eine besonders robuste Ausführung des Gehäuses mit größeren Wandstärken im Bereich des Aufnahmebehälters sowie zusätzliche Sicherheitseinrichtungen, wie bei Zentrifugen erforderlich, die das Herausschleudern des Gutes verhindern bzw. das Bedienungspersonal vor Verletzungen schützen sollen, müssen hier nicht vorgesehen werden. Die Vorrichtung kann damit wesentlich kostengünstiger gebaut werden.
- Durch die Wahl der Lufteinlässe im Bereich der Zerkleinerungseinrichtung wird das Kunststoffgut sowohl in der Zerkleinerungseinrichtung, als auch im Aufnahmebehälter getrocknet. Damit wird eine Kondensatbildung im Inneren der gesamten Vorrichtung zuverlässig verhindert.
- Durch die Konvektionsströmung im Inneren des Aufnahmebehälters, hervorgerufen durch das Einleiten von vorzugsweise trockener, vorgewärmter Luft in die Zerkleinerungseinrichtung und dann weiter in den Aufnahmebehälter bzw. durch die Absaugung der feuchten Luft aus dem Aufnahmebehälter wird für das darin lose verteilte Kunststoffgut eine schnelle Trocknungskinetik erzielt.
- Sollte das aufzubereitende Kunststoffgut vor seiner Zufuhr zur Vorrichtung bereits verdichtet gewesen sein, so wird es im Aufnahmebehälter aufgrund der dort herrschenden Konvektionsströmung gelockert.
- Durch Einblasen der Luft direkt im Bereich der Zerkleinerungseinrichtung und durch Lenken der Luft im Spaltraum hauptsächlich in der gleichen Strömungsrichtung (im Gleichstrom) wie das zu fördernde Kunststoffgut wird zusätzlich die Zufuhr des Kunststoffgutes zur Zerkleinerungseinrichtung unterstützt. Das gesamte Kunststoffgut wird damit zuverlässig in die Zerkleinerungseinrichtung geführt, bevor es von dort zur Austragsöffnung der Vorrichtung gelangen kann.
- Die Vorrichtung ist derart konzipiert, dass nur Kunststoffgut, das mindestens einmal von der Zerkleinerungseinrichtung erfasst wurde und dabei weiter zerkleinert wurde, zur Austragsöffnung der Vorrichtung und danach beispielsweise in einen Kunststoff-Extruder gelangt. Dadurch werden Folgeschäden wie Verblockungen an nachfolgenden Recycling-Maschinen vermieden.
- Auch große Kunststoffteile und schwer zerkleinerbare Materialien können einstufig verarbeitet werden.

Mit aus den Dokumenten WO 2008/098274 A1, DE 26 09 850 A1, US 3,960,334 A, US 2003/0168537 A1 oder US 5,556,039 A bekannten Zerkleinerungsvorrichtungen für Kunststoffabfälle sind nicht sämtliche genannten Vorteile der Erfindung zu erzielen.

In einer bevorzugten Ausführungsform der Erfindung umfasst die Vorrichtung eine Drucklufterzeugungseinrichtung, deren Ausgang an die Lufteinlässe der Vorrichtung angeschlossen ist. Die Aufgabe der Drucklufterzeugungseinrichtung besteht darin, Druckluft in ausreichender Menge zur Verfügung zu stellen, um eine Konvektionsströmung im Inneren der Vorrichtung zu erzeugen und damit den gewünschten Trocknungseffekt für das feuchte Kunststoffgut zu erreichen.

Weiters kann die erfindungsgemäße Vorrichtung eine Dampfabsaugeinrichtung aufweisen, die an die Luftauslässe der Vorrichtung angeschlossen ist. Die feuchte Luft bzw. der Dampf wird damit zuverlässig aus der Vorrichtung abgeführt und an die Umgebung geleitet. Damit werden eine Kondensatbildung in der Vorrichtung sowie ein unerwünschtes weiteres Befeuchten des feuchten Kunststoffgutes durch den sonst vorhandenen Dampf im Inneren des Behälters verhindert.

Vorteilhafterweise ist bei der Vorrichtung die Drucklufterzeugungseinrichtung als Seitenkanalverdichter ausgebildet. Derartige Seitenkanalverdichter sind für alle Anwendungen geeignet, bei denen mehr Druck benötigt wird als herkömmliche Ventilatoren erzeugen können. Die rotierenden Teile eines Seitenkanalverdichters berühren das Gehäuse nicht, es gibt also keine Reibung und deshalb ist auch keine Schmierung notwendig. Der Verdichtungsvorgang erfolgt absolut ölfrei und kohlenstaubfrei, eine Verunreinigung der Luft findet nicht statt.

Vorzugsweise ist die Dampfabsaugeinrichtung als Radialgebläse ausgeführt.

Die Vorrichtung ist zweckmäßigerweise so gestaltet, dass der Behälter zur Aufnahme des Kunststoffgutes mit der Umgebung kommuniziert. Durch diese oben offene Bauweise des Behälters ist es einfach möglich, beispielsweise mit einem Förderband oder Förderschacht das feuchte Kunststoffgut in die Vorrichtung zu füllen. Der Aufnahmebehälter kann mit einer Abdeckhaube oder dergleichen ausgerüstet sein, um ein Austragen sehr leichter Kunststoffpartikel aus der Vorrichtung zu verhindern. Eine derartige Abdeckhaube ist aber zumindest mit einer Öffnung für die Zufuhr des Kunststoffgutes versehen.

Die Einrichtung zur Zerkleinerung des Kunststoffgutes, welche in den Aufnahmebehälter der Vorrichtung ragt oder darin angeordnet ist, umfasst einen um eine Rotationsachse drehbaren Rotorkörper, der an seiner Umfangfläche mit Messern bestückt ist, wobei vorzugsweise im Behälter nahe der Umlaufbahn der Messer des Rotorkörpers stehende Messer angeordnet sind, die mit den Messern des Rotorkörpers einen Schereffekt auf das Kunststoffgut ausüben. Zusätzlich kann im Bereich der Materialaufgabe in die Zerkleinerungseinrichtung noch ein Stopfschieber vorhanden sein, der regelmäßig vor und zurück bewegt wird und somit sichergestellt wird, dass das Kunststoffgut vom mit Messern bestückten Rotorkörper erfasst, anschließend in den Spalt zwischen Rotorkörper und stehenden Messern gelangt und dort durch Scherwirkung weiter zerkleinert wird.

In der Vorrichtung wird der Rotor der Zerkleinerungseinrichtung zumindest teilweise von einer Mantelwand umgeben, die in einem Abstand von der Umlaufbahn der Messer des Rotorkörpers angeordnet ist, wobei die Lufteinlässe in der Mantelwand angeordnet sind. Mit dieser Ausführungsform wird der Spaltraum um den Rotorkörper, beginnend mit dem ersten stehenden Messer und anschließend in Umfangsrichtung des Rotorkörpers durch die Mantelwand begrenzt, weiter fortgesetzt und es wird eine längere Einwirkung der Scherkräfte auf das Kunststoffgut und damit eine noch effizientere Zerkleinerung erreicht. Die Lufteinlässe in der Mantelwand versorgen die Zerkleinerungseinrichtung mit trockener Luft, welche die noch vorhandene Restfeuchte auf dem Kunststoffgut innerhalb der Zerkleinerungseinrichtung aufnimmt und danach als feuchte Luft bzw. Dampf im Aufnahmebehälter aufsteigt.

Durch Vorsehen einer Fördereinrichtung, insbesondere einer Dosierschnecke, die an die Austragsöffnung der Vorrichtung angeschlossen ist, wird vorteilhaft das zerkleinerte und getrocknete Kunststoffgut kontinuierlich aus der Vorrichtung ausgetragen. Damit kann die Vorrichtung ohne Pufferbehälter direkt mit einer nachfolgenden Verfahrenseinheit, wie beispielsweise einem kontinuierlich arbeitenden Kunststoff-Extruder verbunden werden.

Die Erfindung wird nun anhand eines Ausführungsbeispiels, auf das die Erfindung jedoch nicht beschränkt ist, unter Bezugnahme auf die folgenden Zeichnungen näher beschrieben. In den Zeichnungen zeigen:

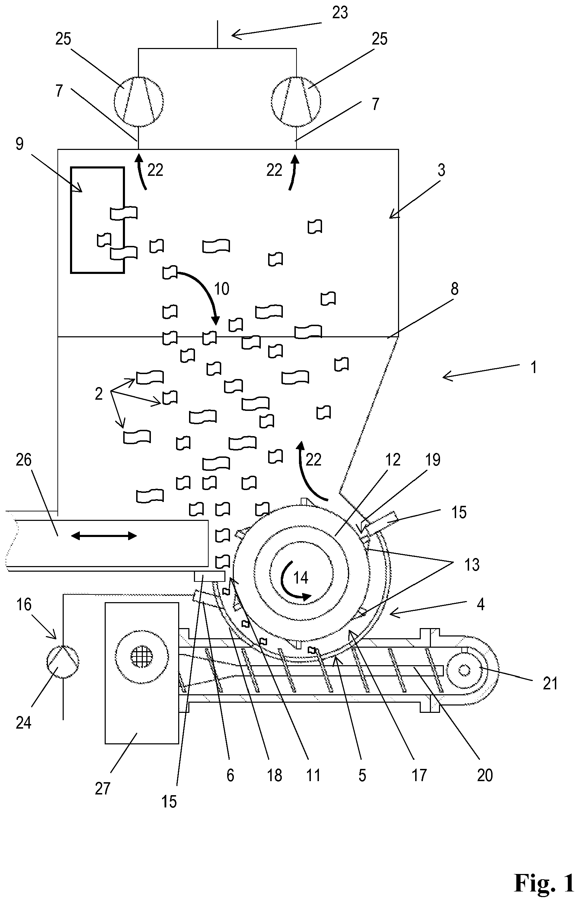

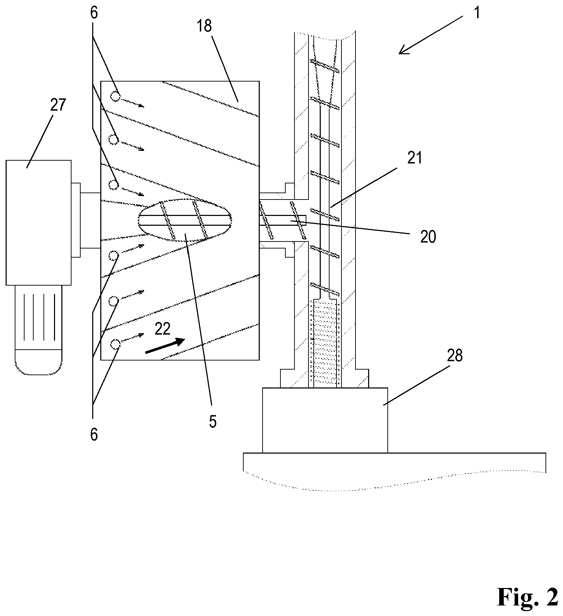

Fig. 1 eine erfindungsgemäße Vorrichtung zum Zerkleinern von Kunststoffabfall in einer schematischen Schnittzeichnung von der Seite; und Fig. 2 ein Detail der Vorrichtung im Bereich der Zerkleinerungseinrichtung in einer schematischen Ansicht von oben.

In Fig. 1 ist die Vorrichtung 1 zur Zerkleinerung von thermoplastischem Kunststoffgut 2 dargestellt, umfassend einen Behälter 3 zur Aufnahme des, insbesondere lose gepackten, Kunststoffguts 2 und eine in den Behälter 3 ragende oder darin angeordnete Zerkleinerungseinrichtung 4 zur Zerkleinerung des Kunststoffguts und seiner Förderung zu einer Austragsöffnung 5, gekennzeichnet durch Lufteinlässe 6 im Bereich der Zerkleinerungseinrichtung 4 und Luftauslässe 7 in der Behälterwand 8.

Zur besseren Übersicht ist in Fig. 1 die Vorrichtung 1 in einer Schnittansicht von der Seite dargestellt, wobei die gewählte Schnittebene vertikal in der Mitte der Vorrichtung 1 liegt. Damit wird ein Blick in das Innere der Vorrichtung 1 ermöglicht.

Das feuchte Kunststoffgut 2 gelangt von außen mittels Förderband oder einer anderwärtigen, beispielsweise pneumatischen Fördereinrichtung, die in Fig. 1 nicht dargestellt ist und auch nicht zur erfindungsgemäßen Vorrichtung 1 gehört, durch eine Öffnung 9 in den Behälter 3 der Vorrichtung 1. Die Öffnung 9 befindet sich im Bereich der Behälterwand 8.

Aufgrund der Schwerkraft würde das feuchte Kunststoffgut 2 im Behälter 3 direkt in Pfeilrichtung 10 nach unten zur Zerkleinerungseinrichtung 4 gelangen und dort dicht aufeinander zu liegen kommen. Damit wäre auch die Restfeuchte, die auf dem Kunststoffgut noch anhaftet, eingeschlossen, eine Trocknung des Kunststoffgutes wäre nur unzureichend möglich. Weiters würde das aufeinander liegende Kunststoffgut den Spalt 11, der sich zwischen dem Rotorkörper 12 bzw. den darauf befestigten Messern 13, wobei der Rotorkörper 12 in Umdrehungsrichtung 14 rotiert, und den stehenden Messern 15 befindet, möglicherweise verblocken, das Kunststoffgut 2 könnte somit nicht in den Zerkleinerer 4 gelangen und ein störungsfreier Betrieb wäre damit nicht gewährleistet.

Daher ist die Erfindung durch Lufteinlässe 6 im Bereich der Zerkleinerungseinrichtung 4 gekennzeichnet, in Fig. 1 als Lufteinlässe 6 in der Mantelwand 18 dargestellt, wobei die Luft aus einer Drucklufterzeugungseinrichtung 16 über Leitungen zu den Lufteinlässen 6 geführt wird und dann gezielt in den Spaltraum 17 zwischen der Mantelwand 18, die in einem Abstand von der Umlaufbahn der Messer 13 des Rotorkörpers 12 angeordnet ist, und dem Rotorkörper 12 eingedüst wird. Dabei wird die Luft, die durch die Lufteinlässe 6 vorzugsweise trocken in die Zerkleinerungseinrichtung 4 gelangt, im Spaltraum 17 hauptsächlich in Umdrehungsrichtung 14 des Rotorkörpers 12 und damit in Förderrichtung des Kunststoffgutes 2 geführt und somit wird durch Konvektionsströmung im Spaltraum 17 Feuchte vom Kunststoffgut 2 abgeführt und eine Kondensatbildung an der Mantelwand 18 sowie am Rotorkörper 12 vermieden.

Die Drucklufterzeugungseinrichtung 16 ist vorzugsweise als Seitenkanalverdichter 24 ausgeführt.

Die Hauptmenge der eingeblasenen Luft strömt in Drehrichtung 14 entlang des Rotorkörpers 12 durch den Spaltraum 17, bis sie am gegenüberliegenden Austrittsspalt 19, der abermals von einem oder mehreren stehenden Messern 15 und den auf dem Rotorkörper 12 befestigten drehenden Messern 13 gebildet wird, in den Innenraum des Behälters 3 gelangt. Ein kleinerer Teilstrom der eingeblasenen Luft gelangt entgegen der Drehrichtung 14 des Rotorkörpers 12 und damit entgegen der Förderrichtung des Kunststoffgutes 2 innerhalb der Zerkleinerungseinrichtung 4 durch den Spalt 11 in das Innere des Behälters 3 und lockert dabei allfällig im Bereich des Spalts 11 liegendes Kunststoffgut 2. Ein weiterer kleinerer Teilstrom der über die Lufteinlässe 6 eingeblasenen Luft verlässt den Spaltraum 17 über die Austragsöffnung 5 und gelangt damit gemeinsam mit dem zerkleinerten Kunststoffgut in die Dosierschnecke 20 und dann weiter in die Extruderschnecke 21, die das Kunststoffgut zum nachfolgenden, in Fig. 1 nicht dargestellten Extruder fördert.

Im Inneren des Behälters 3 steigt die Luft von der Zerkleinerungseinrichtung 4 in Pfeilrichtung 22 nach oben. Die Strömungsgeschwindigkeit der Luft im Inneren des Behälters 3 wird so gewählt, dass das aufgegebene Kunststoffgut 2 mit geringer Geschwindigkeit im Gegenstrom in Pfeilrichtung 10 nach unten zur Zerkleinerungseinrichtung 4 sinkt und dabei vom aufsteigenden Luftstrom getrocknet wird. Sehr leichte oder flächige Kunststoffpartikel sollen dabei nicht aus dem Behälter 3 ausgetragen werden.

Zweckmäßigerweise ist dazu eine entsprechende Abdeckhaube im Bereich der Öffnung 9 für die Kunststoffzufuhr vorgesehen, die beispielsweise als feines Sieb oder Fließ ausgeführt und an die nicht dargestellte Fördereinrichtung angepasst ist, und den Austritt sehr kleiner Kunststoffpartikel aus der Vorrichtung 1 bzw. durch Spalte zwischen der Vorrichtung 1 und der Fördereinrichtung zur Zufuhr des Kunststoffgutes verhindert. Eine derartige Abdeckhaube ist in Fig. 1 nicht dargestellt.

Die feuchte Luft bzw. der Dampf wird im oberen Teil des Behälters 3 über Luftauslässe 7 in der Behälterwand 8 aus der Vorrichtung 1 heraus an die Umgebung abgeführt. In Fig. 1 sind diese Luftauslässe 7 an eine Dampfabsaugeinrichtung 23 angeschlossen. Die Dampfabsaugeinrichtung ist vorzugsweise als Radialgebläse 25 ausgeführt, wobei in Fig. 1 zwei Lufteinlässe 7 mit jeweils einem eigenen Radialgebläse 25 dargestellt sind.

Weiters ist in Fig. 1 waagrecht im unteren Bereich des Behälters 3 ein Stopfschieber 26 vorgesehen. Mit Hilfe des Stopfschiebers 26, der in waagrechter Richtung nach vorn und wieder zurück bewegt wird, wird zuverlässig Kunststoffgut 2 zum Spalt 11 zugeführt. Außerdem zeigt Fig. 1 den Antrieb 27 der Dosierschnecke 20.

Fig. 2 zeigt ein Detail der Vorrichtung 1 im Bereich der Zerkleinerungseinrichtung 4 in einer schematischen Schnittansicht von oben. Dabei ist die Mantelwand 18, die den hier nicht dargestellten Rotorkörper 12 umhüllt, mit mehreren Lufteinlässen 6 dargestellt. Durch Pfeile 22 ist die Strömungsrichtung der eingeblasenen Luft bzw. die Transportrichtung des zerkleinerten Kunststoffgutes 2 angedeutet. Die Mantelwand 18 ist, wie Fig. 2 zeigt, durch Rillen oder Stege derart profiliert, dass das Kunststoffgut 2 im Spaltraum 17 durch die schräg laufenden Rillen bzw. Stege in Richtung der mittig angeordneten Austragsöffnung 5 zusammengeschoben wird und von dort in die Dosierschnecke 20 gelangt. Weiters ist in Fig. 2 der Antrieb 27 der Dosierschnecke 20 sowie die dazu im Winkel angebrachte weitere Extruderschnecke 21 samt deren Antrieb 28 dargestellt. Die beiden Förderschnecken 20 bzw. 21 sind zum besseren Verständnis horizontal geschnitten dargestellt.

## Patentansprüche

1. Vorrichtung (1) zur Zerkleinerung von thermoplastischem Kunststoffgut (2), umfassend einen Behälter (3) zur Aufnahme des, insbesondere lose gepackten, Kunststoffguts und eine in den Behälter ragende oder darin angeordnete Zerkleinerungseinrichtung (4) zur Zerkleinerung des Kunststoffguts, wobei die Zerkleinerungseinrichtung (4) zumindest einen um eine waagrechte Rotationsachse drehbaren Rotorkörper (12) umfasst, der an seiner Umfangsfläche mit Messern (13) bestückt ist, wobei vorzugsweise im Behälter (3) nahe der Umlaufbahn der Messer (13) des Rotorkörpers (12) stehende Messer (15) angeordnet sind, die mit den Messern des Rotorkörpers einen Schereffekt auf das Kunststoffgut ausüben, wobei die Vorrichtung (1) Lufteinlässe (6) im Bereich der Zerkleinerungseinrichtung (4) und Luftauslässe (7) in der Behälterwand (8) aufweist, und wobei die Vorrichtung (1) eine den Rotorkörper (12) zumindest teilweise umgebende Mantelwand (18) aufweist, die in einem Abstand von der Umlaufbahn der Messer (13) des Rotorkörpers (12) angeordnet ist und durch Rillen oder Stege profiliert ist, wobei die Lufteinlässe (6) in der Mantelwand (18) angeordnet sind, wobei die Luft aus einer Drucklufterzeugungseinrichtung (16) über Leitungen zu den Lufteinlässen (6) geführt wird, und wobei eine Führung der Luft im Spaltraum (17) hauptsächlich in Umdrehungsrichtung (14) des Rotorkörpers (12) und damit in Förderrichtung des Kunststoffgutes (2) erfolgt, **dadurch gekennzeichnet, dass** die Zerkleinerungseinrichtung (4) zur Förderung des Kunststoffguts zu einer Austragsöffnung (5) ausgebildet ist, wobei die Rillen oder Stege bei Drehung des Rotorkörpers (12) das Kunststoffgut (2) im Spaltraum (17) in Richtung der Austragsöffnung (5) zusammenschieben.

2. Vorrichtung (1) nach Anspruch 1, **gekennzeichnet durch** eine Drucklufterzeugungseinrichtung (16), deren Ausgang an die Lufteinlässe (6) angeschlossen ist.

3. Vorrichtung (1) nach Anspruch 1 oder 2, **gekennzeichnet durch** eine an die Luftauslässe (7) angeschlossene Dampfabsaugeinrichtung (23).

4. Vorrichtung (1) nach Anspruch 2 oder 3, **dadurch gekennzeichnet, dass** die Drucklufterzeugungseinrichtung (16) als Seitenkanalverdichter (24) und/oder die Dampfabsaugeinrichtung (23) als Radialgebläse (25) ausgebildet sind.

5. Vorrichtung (1) nach einem der vorhergehenden Ansprüche, **dadurch gekennzeichnet, dass** der Behälter (3) mit der Umgebung kommuniziert.

6. Vorrichtung (1) nach einem der vorhergehenden Ansprüche, **dadurch gekennzeichnet, dass** an die Austragsöffnung (5) eine Fördereinrichtung (20) für das zerschnittene Kunststoffgut, insbesondere eine Dosierschnecke angeschlossen ist.

## Claims

1. A device (1) for size reduction of thermoplastic goods (2), comprising a container (3) for receiving the in particular loosely packed thermoplastic goods and a size reduction device (4) projecting into the container or arranged therein for reducing the thermoplastic goods in size, wherein the size reduction device (4) comprises at least one rotor body (12) rotatable around a horizontal axis of rotation, which is equipped at its circumferential surface with knives (13), wherein there are arranged preferably in the container (3) near the trajectory of the knives (13) of the rotor body (12) standing knives (15), which exert a shear effect with the knives of the rotor body onto the thermoplastic goods, wherein the device has air inlets (6) in the region of the size reduction device (4) and air outlets (7) in the container wall (8), and wherein the device (1) has a sheath wall (18) surrounding at least in part the rotor body (12), which is arranged spaced apart from the trajectory of the knives (13) of the rotor body (12) and is shaped by grooves or ridges, wherein the air inlets (6) are arranged in the sheath wall (18), wherein the air inlets (6) are arranged in the sheath wall (18), wherein the air is guided from a device for the generation of compressed air (16) via pipes to the air inlets (6), and wherein air is guided in the space of the gap (17) mainly in the direction of rotation (14) of the rotor body (12) and, hence, in the conveying direction of the thermoplastic goods (2), **characterized in that** the size reduction device (4) is configured to convey the thermoplastic goods to a discharge opening (5), wherein the grooves or ridges, upon rotation of the rotor body (12), push together the thermoplastic goods (2) within the gap space (17) in the direction to the discharge opening (5).

2. A device (1) according to claim 1, **characterized by** a device for the generation of compressed air (16), the discharge of which being attached to the air inlets (6).

3. A device (1) according to claim 1 or 2, **characterized by** a steam suction device (23) attached to the air outlets (7).

4. A device (1) according to claim 2 or 3, **characterized by** the fact that the device for the generation of compressed air (16) is formed as a lateral channel compressor (24) and/or the steam suction device (23) as a radial blower (25).

5. A device (1) according to any of the preceding claims, **characterized by** the fact that the container (3) is in communication with the surrounding.

6. A device (1) according to any of the preceding claims, **characterized by** the fact that there is attached at the discharge opening (5) a conveyor device (20) for the reduced thermoplastic goods, in particular a dosing screw.

## Revendications

1. Dispositif (1) pour le broyage de matière plastique thermoplastique (2), comprenant un réservoir (3) destiné à contenir la matière plastique, en particulier entassée librement, et un système de broyage (4) pénétrant dans le réservoir ou disposé dans celui-là pour le broyage de la matière plastique, dans lequel le système de broyage (4) comprend au moins un corps de rotor (12) pouvant tourner autour d'un axe de rotation horizontal, qui est équipé de couteaux (13) sur sa surface périphérique, dans lequel des couteaux fixes (15) sont de préférence disposés dans le réservoir (3) à proximité de la trajectoire circulaire des couteaux (13) du corps de rotor (12) et exercent avec les couteaux du corps de rotor un effet de cisaillement sur la matière plastique, dans lequel le dispositif (1) présente des entrées d'air (6) dans la région du système de broyage (4) et des sorties d'air (7) dans la paroi de réservoir (8), et dans lequel le dispositif (1) présente une paroi latérale (18) entourant au moins partiellement le corps de rotor (12), qui est disposée à une distance de la trajectoire circulaire des couteaux (13) du corps de rotor (12) et qui est profilée par des rainures et des nervures, dans lequel les entrées d'air (6) sont disposées dans la paroi latérale (18), dans lequel l'air est conduit depuis un système de production d'air comprimé (16) par des conduites jusqu'aux entrées d'air (6) et dans lequel un guidage de l'air dans la fente (17) est assuré principalement dans la direction de révolution (14) du corps de rotor (12) et dès lors dans la direction de transport de la matière plastique (2), **caractérisé en ce que** le système de broyage (4) est configuré pour le transport de la matière plastique jusqu'à une ouverture d'extraction (5), dans lequel les rainures ou les nervures font progresser la matière plastique (2) dans la fente (17) en direction de l'ouverture d'extraction (5) lors de la rotation du corps de rotor (12).

2. Dispositif (1) selon la revendication 1, **caractérisé par** un système de production d'air comprimé (16), dont la sortie est raccordée aux entrées d'air (6).

3. Dispositif (1) selon une revendication 1 ou 2, **caractérisé par** un système d'aspiration de vapeur (23) raccordé aux sorties d'air (7).

4. Dispositif (1) selon une revendication 2 ou 3, **caractérisé en ce que** le système de production d'air comprimé (16) est formé par un compresseur à canal latéral (24) et/ou le système d'aspiration de vapeur (23) est formé par une soufflante radiale (25).

5. Dispositif (1) selon l'une quelconque des revendications précédentes, **caractérisé en ce que** le réservoir (3) communique avec l'environnement.

6. Dispositif (1) selon l'une quelconque des revendications précédentes, **caractérisé en ce qu'**un système de transport (20) pour la matière plastique broyée, en particulier une vis de dosage, est raccordé à l'ouverture d'extraction (5).
